# EUROPEAN PATENT SPECIFICATION

(11) **EP 3 184 347 B1**
(45) Date of publication and mention of the grant of the patent: **15.01.2020**
(21) Application number: 16194570.4
(22) Date of filing: 19.10.2016
(51) Int. Cl.: B60K 37/02, G01D 11/28, G02B 6/00

(54) **VEHICULAR INSTRUMENT**
FAHRZEUGINSTRUMENT
INSTRUMENT DE VÉHICULE

(30) Priority: 25.12.2015 JP 2015254794
(43) Date of publication of application: 28.06.2017
(73) Proprietor: Nippon Seiki Co., Ltd., Nagaoka-shi, Niigata 940-8580 (JP); HONDA MOTOR CO., LTD., Tokyo (JP)
(72) Inventor: Kobayashi, Sawako, Niigata (JP); Kataoka, Yuichi, Saitama (JP)
(74) Representative: Strobel, Wolfgang

(56) References cited:
- JP-A- H10 142 008
- US-A1- 2014 376 204
- US-B1- 6 318 872

## Description

### Technical Field

The present invention relates to a vehicular instrument having an information display part for displaying information relating to a vehicle.

### Background Art

In many vehicles, a vehicular instrument is mounted in front of an occupant. Some vehicular instruments have an information display part on which, for example, a travel distance of the vehicle is displayed. One of such conventional vehicular instruments is disclosed in Patent Literature 1.

The prior art invention disclosed in Patent Literature 1 will be described below with reference to Fig. 8. Fig. 8 is a view corresponding to Fig. 1 of Patent Literature 1, in which reference numerals are newly given as appropriate.

As shown in Fig. 8, a conventional vehicular instrument 110 disclosed in Patent Literature 1 includes a measurement value display part 150 having an opening 150a formed in a part thereof, and a pointer 142 rotatably attached on the measurement value display part 150.

Generally, an information display part 133 is viewed through the opening 150a of the measurement value display part 150. The information display part 133 has a liquid crystal display on which vehicle information such as a travel distance is displayed.

The vehicular instrument is a device visible from an occupant, and is therefore desired to have an excellent design quality.

### Prior Art Literature

Patent Literature 1: Japanese Patent Application Laid-Open Publication No. 2005-214754

Further relevant prior art is disclosed by US 2014/376204 A1, US 6 318 872 B1 and JP H10 142008 A.

### Summary of the Invention

### Technical Problems

It is therefore an object of the present invention to provide a vehicular instrument having an excellent design quality.

### Solutions to Problems

According to the present invention there is provided a vehicular instrument according to claim 1.

It is preferable, as defined in claim 2, that the vehicular instrument further comprises a second light guide body arranged between the light guide body and the decoration opening to guide the light guided by the light guide body toward the decoration opening.

Preferably, as defined in claim 3, the second light guide body has a distal end thereof formed to be a rough surface so as to diffuse light that illuminates the decoration opening.

Preferably, as defined in claim 4, the vehicular instrument further comprises a second information display part arranged adjacent to the information display part, and it is preferable that the second information display part includes a measurement value display part having measurement values displayed on a surface thereof, and a pointer rotatably attached on the measurement value display part to indicate the measurement values, the light shielding member has a portion formed between the information display part and the second information display part, and the measurement value display part extends to a position below the portion of the light shielding member, and at the position the second light guide body is mounted on an upper surface of the measurement value display part.

### Advantageous Effects of the Invention

In the invention as defined in claim 1, the light shielding member has the decoration opening formed in the part of the region overlapping the light guide body so as to allow the light guided by the light guide body to pass therethrough. When the light source is lighted, a part of the light guided by the light guide body illuminates the information display part, and the residual part of the light passes through the decoration opening. This configuration allows vehicle information displayed on the information display part to be recognized and simultaneously the decoration opening to be illuminated. By thus illuminating the decoration opening, design quality of the vehicular instrument can be enhanced.

To enhance the design quality of the vehicular instrument, the decoration opening is formed in the light shielding member, and light is guided theretoward by the light guide body. Thus, since the light guide body for irradiating the information display part is utilized, the enhancement of the design quality of the vehicular instrument can be achieved without increasing the number of components.

Further, in the invention as defined in claim 2, the second light guide body is arranged between the light guide body and the decoration opening to guide the light guided by the light guide body toward the decoration opening. With the second light guide body, light from the light guide body can be efficiently guided to the decoration opening. In this manner, the design quality of the vehicular instrument can be further enhanced.

Furthermore, in the invention as defined in claim 3, the second light guide body has the distal end thereof formed to be a rough surface so as to diffuse the light that illuminates the decoration opening. By thus diffusing the light emitted from the second light guide body, the light passes through the entire decoration opening. As a result, the design quality of the vehicular instrument can be furthermore enhanced.

Moreover, in the invention as defined in claim 4, the measurement value display part extends to the position below the portion of the light shielding member, and at the position the second light guide body is mounted on the upper surface of the measurement value display part. The second light guide body can be supported in this manner without increasing the number of components to support the second light guide body.

### Brief Description of the Drawings

Fig. 1 is a front view of a vehicular instrument according to an embodiment of the present invention;
Fig. 2 is a cross-sectional view taken along line 2 - 2 of Fig. 1;
Fig. 3 is a view illustrating a light guide ring shown in Fig. 2;
Fig. 4 is a cross-sectional view taken along line 4 - 4 of Fig. 3;
Fig. 5 is an enlarged partial view of Fig. 2;
Fig. 6 is a view illustrating a light source and a light guide body shown in Fig. 5;
Figs. 7(a) and 7(b) are views illustrating an operation of the present invention; and

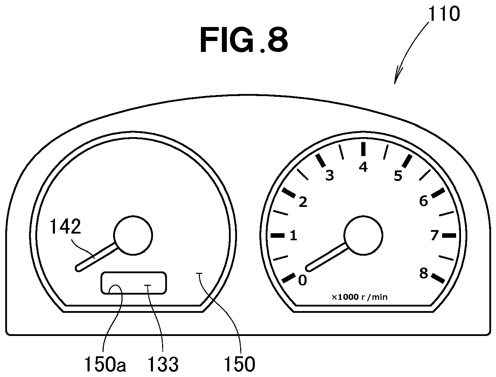

Fig. 8 is a view illustrating a basic configuration of the prior art.

### Description of preferred Embodiments

A certain preferred embodiment of the present invention will be described in detail below with reference to the accompanying drawings. In the following description, the terms "left" and "right" are used to refer to directions as viewed from an occupant or driver of a two-wheeled vehicle, and the terms "front" and "rear" are used to refer to directions with respect to an advancing direction of the two-wheeled vehicle. In the drawings, "Fr", "Rr", "Le", "Ri", "Up", and "Dn" indicate respectively "forward", "rearward", "leftward", "rightward", "upward", and "downward".

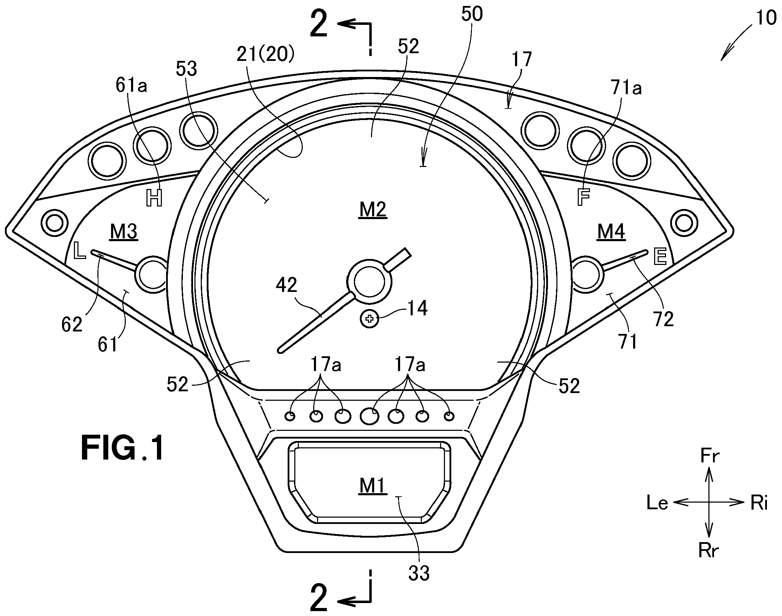

As shown in Fig. 1, a vehicular instrument 10 is mounted on, for example, a two-wheeled vehicle, and includes a rear information display means M1 arranged on a rear central portion thereof, a front information display means (second information display part) M2 arranged forward of the rear information display means M1, a left information display means (third information display part) M3 arranged on the left side of the front information display means M2, and a right information display means (fourth information display part) M4 arranged on the right side of the front information display means M2.

On the rear information display means M1, vehicle information is displayed by an electric means. The rear information display means M1 functions as, for example, an odometer, a trip meter and a fuel consumption meter, and is capable of switching the functions.

The front information display means M2 is a speed meter, the left information display means M3 is a water temperature meter, and the right information display means M4 is a fuel meter, for example.

Note that the vehicle information which can be recognized on the front information display means M2, the left information display means M3 and the right information display means M4 is not limited to a vehicle speed, a cooling water temperature and a fuel residual quantity, and any arbitrary information such as an engine speed may be displayed thereon.

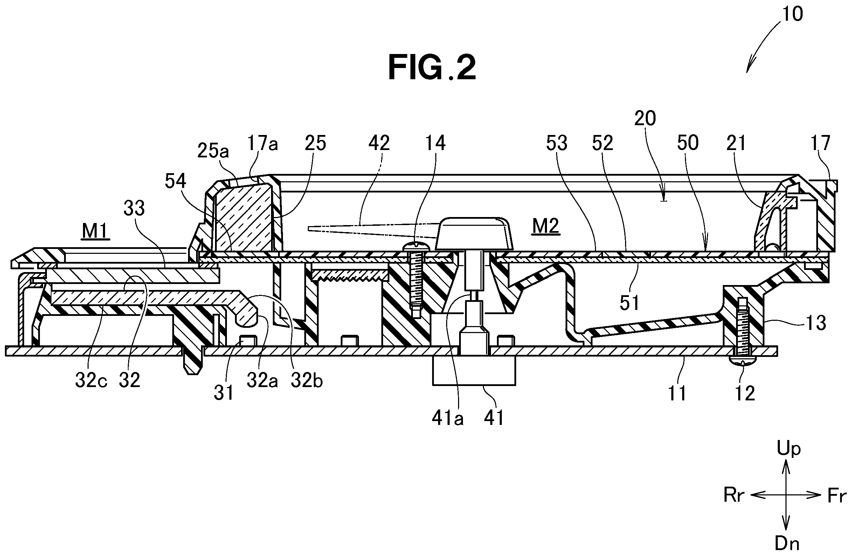

As shown in Fig. 2, the vehicular instrument 10 includes a substrate 11, a case body 13 fixed on an upper surface of the substrate 11 via a screw 12, a measurement value display part 50 fixed on an upper surface of the case body 13 via a screw 14, a light guide ring 20 fixed on an upper surface of the measurement value display part 50 and configured to guide light, and a light shielding member 17 mounted so as to cover the light guide ring 20 and thereby shield the light.

The substrate 11 is, for example, a hard circuit board made of glass epoxy-based material and having a wiring pattern formed thereon. The case body 13 is made of, for example, white synthetic resin. The light shielding member 17 is made of, for example, black synthetic resin.

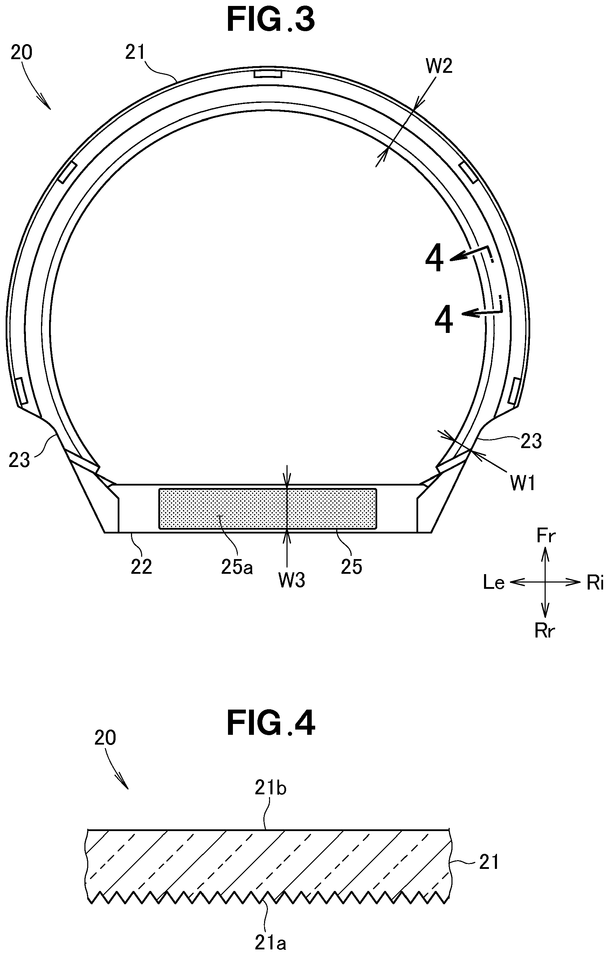

Referring also to Fig. 3, the light guide ring 20 is made of colorless synthetic resin, and has a horseshoe shape formed by a substantially C-shaped curved portion 21, a linear portion 22 extending linearly between opposite ends of the curved portion 21, and boundary portions 23 between the curved portion 21 and the linear portion 22.

As shown in Fig. 4, the curved portion 21 has a serrated lower surface 21a. With the serrated lower surface 21a, light is reflected from the lower surface 21a toward an upper surface 21b of the curved portion, and the reflected light forms a striped pattern. The striped pattern appears along a circumferential edge of the front information display means M2 (Fig. 1). Thus, the curved portion 21 constitutes a decoration part of the front information display means M2.

As shown in Fig. 3, part of the linear portion 22 is formed as a linear light guide body (second light guide body) 25 for guiding light entered from a lower surface thereof toward an upper surface. The upper surface (i.e., distal end 25a) of the linear light guide body 25 is formed to be a rough surface.

The boundary portions 23 each have a width W1 smaller than a width W2 of the curved portion 21 and a width W3 of the linear portion 22, which is expressed by inequalities: W1 < W2 and W1 < W2. With this configuration, light guided by the curved portion 21 can be prevented from entering into the linear portion 22, and light guided by the linear portion 22 can be prevented from entering into the curved portion 21. Thus, by setting the width of the boundary portions 23 smaller, the lights are prevented from interfering with each other. As a result, the design quality of the vehicular instrument 10 can be enhanced.

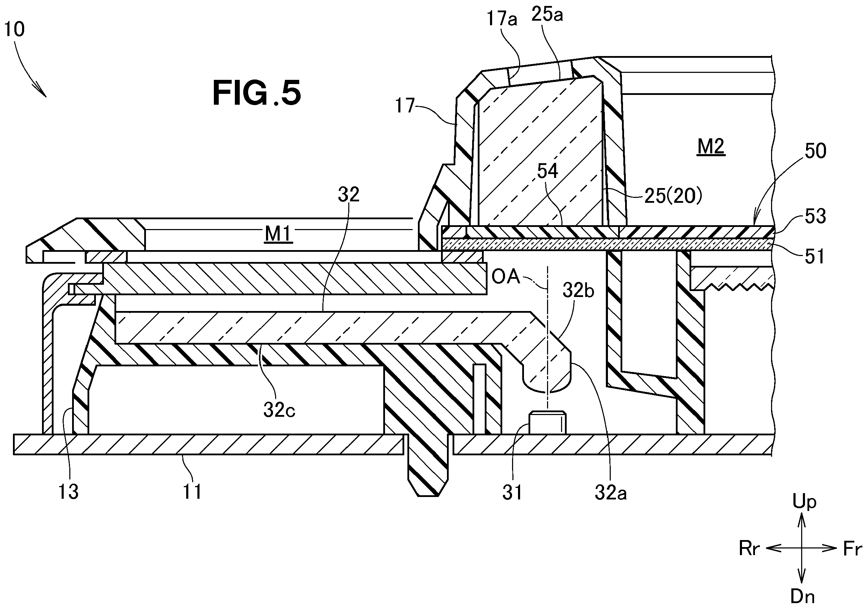

As shown in Figs. 2 and 5, the rear information display means M1 includes a light source 31 mounted on the upper surface of the substrate 11, a light guide body 32 for guiding light emitted from the light source 31, and an information display part 33 for displaying vehicle information by receiving irradiation of the light guided by the light guide body 32. The light source 31 is, for example, a chip type light emitting diode that emits white light.

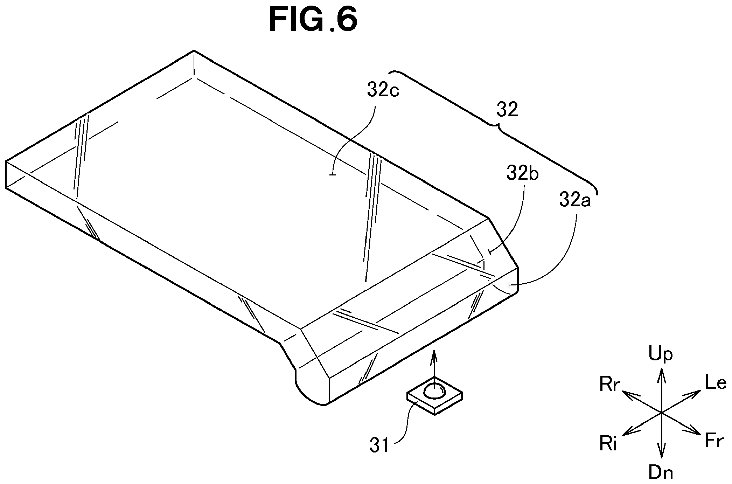

As shown in Figs. 5 and 6, the light guide body 32 is made of colorless synthetic resin. The light guide body 32 has a light entrance portion 32a extending upward above the light source 31 along a light axis OA, a taper portion 32b extending obliquely upward from an upper end of the light entrance portion 32a, and an irradiation portion 32c extending from an upper end of the taper portion 32b substantially horizontally along a lower surface of the information display part 33 so as to irradiate the information display part 33.

A part of the light emitted from the light source 31 is reflected at the taper portion 32b toward the irradiation portion 32c. The residual part of the light emitted from the light source 31 passes through the taper portion 32b. A lower surface of the irradiation portion 32c is formed to be a rough surface. The light reflected toward the irradiation portion 32c is then reflected upward at the irradiation portion 32c.

The information display part 33 is constituted of, for example, a liquid crystal display panel having a pair of transparent substrates and liquid crystal sealed in therebetween.

As shown in Fig. 2, the front information display means M2 includes a motor 41 mounted on a lower surface of the substrate 11, a synthetic resin-made pointer 42 attached to a motor shaft 41a of the motor 41, and the measurement value display part 50 having a surface on which measurement values 52 to be indicated by the pointer 42 are printed.

The motor 41 is, for example, a stepping motor. As a driving means for the pointer 42, a movable magnet type driver may be used.

The measurement value display part 50 includes a base material 51 made of colorless resin, the measurement values 52 printed on an upper surface of the base material 51 with white translucent ink, a light shielding layer 53 printed and formed on the upper surface of the base material 51 with black light-shielding ink, and a white printed section 54 printed and formed on the upper surface of the base material 51 with white translucent ink at a position corresponding to the linear light guide body 25 located thereabove. The measurement values 52 are not limited to numerical values, and may be alphabetic characters, symbols such as a slash, or scale lines.

The light shielding member 17 is a casing arranged on an upper side of the information display part 33 (measurement value display part 50) and having openings formed in a part of a region overlapping the light guide body 32. The openings are decoration openings 17a that allow light guided by the light guide body 32 to pass therethrough. The decoration openings 17a are plural in number (see Fig. 1). Note that the number of the decoration openings 17a may be one. Additionally, each of the decoration openings 17a may have a shape of a character or a mark.

The light source 31, the taper portion 32b of the light guide body 32, the white printed section 54 of the measurement value display part 50, the linear light guide body 25 of the light guide ring 20, and the decoration openings 17a of the light shielding member 17 are vertically overlapped.

As shown in Fig. 1, the left information display means M3 and the right information display means M4 have basic configurations similar to that of the front information display means M2. The left information display means M3 and the right information display means M4 respectively include measurement value display parts 61, 71 having measurement values 61a, 71a displayed on surfaces thereof, and pointers 62, 72 rotatably attached on the measurement value display parts 61, 71 to indicate the measurement values.

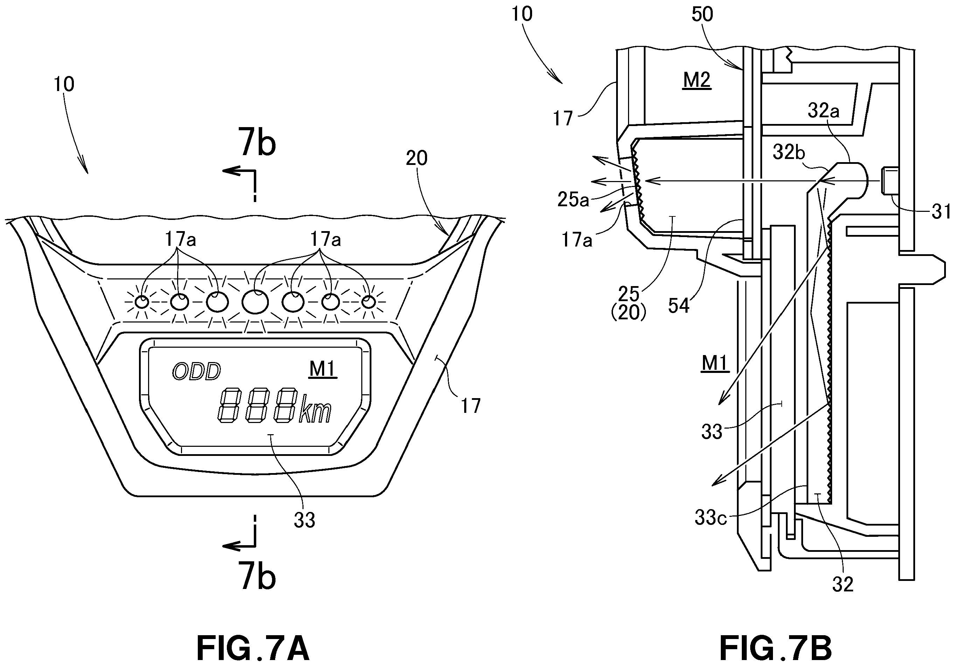

According to the present invention described above, the following advantageous effects are obtained:
As shown in Figs. 7(a) and 7(b), the light shielding member 17 has the decoration openings 17a formed in the part of the region overlapping the light guide body 32 so as to allow the light guided by the light guide body 32 to pass therethrough. When the light source 31 is lighted, a part of the light guided by the light guide body 32 illuminates the information display part 33, and the residual part of the light passes through the decoration openings 17a. This configuration allows the vehicle information displayed on the information display part 33 to be recognized and simultaneously the decoration openings 17a to be illuminated. By thus illuminating the decoration openings 17a, the design quality of the vehicular instrument 10 can be enhanced.

To enhance the design quality of the vehicular instrument 10, the decoration openings 17a are formed in the light shielding member 17, and light is guided theretoward by the light guide body 32. Thus, since the light guide body 32 for irradiating the information display part 33 is utilized, the enhancement of the design quality of the vehicular instrument 10 can be achieved without increasing the number of components.

Additionally, the linear light guide body 25 is arranged between the light guide body 32 and the decoration openings 17a to guide the light guided by the light guide body 32 toward the decoration openings 17a. With the linear light guide body 25, light from the light guide body 32 can be efficiently guided to the decoration openings 17a. In this manner, the design quality of the vehicular instrument 10 can be further enhanced.

Further, the linear light guide body 25 has the distal end 25a thereof formed to be a rough surface so as to diffuse light that illuminates the decoration openings 17a. By thus diffusing the light emitted from the linear light guide body 25, the light passes through the entire decoration openings 17a. As a result, the design quality of the vehicular instrument 10 can be further enhanced.

Moreover, the light guide body 32 has the taper portion 32b inclined toward the light axis OA (Fig. 3). The taper portion 32b is located at a position overlapping the light source 31. The decoration openings 17a are located at positions overlapping the taper portion 32b. Part of the light emitted from the light source 31 is reflected at the taper portion 32b to irradiate the information display part 33. The residual part of the light emitted from the light source 31 passes through the taper portion 32b to illuminate the decoration openings 17a. Thus, light can be guided in various directions by using the taper portion 32b. The design quality of the vehicular instrument 10 can be furthermore enhanced in this manner.

As shown in Fig. 2, the front information display means (second information display part) M2 is arranged adjacent to the information display part 33. The front information display means M2 includes the measurement value display part 50 having the measurement values 52 displayed on the surface thereof, and the pointer 42 rotatably attached on the measurement value display part 50 to indicate the measurement values 52. The light shielding member 17 has a portion formed between the information display part 33 and the front information display means M2. The measurement value display part 50 extends to a position below the portion of the light shielding member 17, and at the position the linear light guide body 25 is mounted on the upper surface of the measurement value display part 50. The linear light guide body 25 can be supported in this manner without increasing the number of components to support the linear light guide body 25. The linear light guide body 25 is mounted on the measurement value display part 50, more particularly, on the white printed section 54 which is printed and formed with white translucent ink so as to allow light to pass therethrough. The light guided to the linear light guide body 25 can be diffused by the white printed section 54. By thus diffusing the light, the light passes through the entire decoration openings 17a. As a result, the design quality of the vehicular instrument 10 can be furthermore enhanced.

Although in the description above the vehicular instrument according to the present invention is mounted on the two-wheeled vehicle, the present invention is applicable not only to the two-wheeled vehicle but also to a four-wheeled vehicle, a three-wheeled vehicle, and other wheeled vehicles.

### Industrial Applicability

The vehicular instrument of the present invention is well suited for use in two-wheeled vehicles.

### Reference Characters:

10 - vehicular instrument
17 - light shielding member
17a - decoration opening
25 - linear light guide body (second light guide body)
25a - distal end
31 - light source
32 - light guide body
32a - light entrance portion
32b - taper portion
33 - information display part
42 - pointer
50 - measurement value display part
52 - measurement value
M2 - front information display means (second information display part)

## Claims

1. A vehicular instrument (10) comprising:
a light source (31);
a light guide body (32) for guiding light emitted from the light source (31);
an information display part (33) for displaying information relating to a vehicle by receiving irradiation of the light guided by the light guide body (32); and
a light shielding member (17) mounted to overlap a peripheral edge of the information display part (33) and having a light shielding property;
wherein at least part of the light guide body (33) is covered by the light shielding member (17); and
wherein the light shielding member (17) has a decoration opening (17a) formed in a part of a region overlapping the light guide body (32) so as to allow the light guided by the light guide body to pass therethrough;
**characterized in that**
the light shielding member (17) is configured by a casing arranged on an upper side of the information display part (33).

2. The vehicular instrument (10) of claim 1, further comprising a second light guide body (25) arranged between the light guide body (32) and the decoration opening (17a) to guide the light guided by the light guide body toward the decoration opening (17a).

3. The vehicular instrument (10) of claim 2, wherein the second light guide body (25) has a distal end (25a) thereof formed to be a rough surface so as to diffuse light that illuminates the decoration opening (17a).

4. The vehicular instrument (10) of claim 2 or 3, further comprising a second information display part (M2) arranged adjacent to the information display part, wherein the second information display part (M2) includes a measurement value display part (50) having measurement values (52) displayed on a surface thereof, and a pointer (42) rotatably attached on the measurement value display part (50) to indicate the measurement values, wherein the light shielding member (17) has a portion formed between the information display part (33) and the second information display part (M2), and wherein the measurement value display part (50) extends to a position below the portion of the light shielding member (17), and at the position the second light guide body (25) is mounted on an upper surface of the measurement value display part (50).

## Patentansprüche

1. Fahrzeuginstrument (10) mit
einer Lichtquelle (31);
einem Lichtleitungskörper (32) zum Leiten des Lichts, das von der Lichtquelle (31) emittiert wird;
einem Informationsanzeigeabschnitt (33) zum Anzeigen von Information, die sich auf ein Fahrzeug bezieht, durch das Erhalten von Lichtstrahlen, die durch den Lichtleitungskörper (32) geleitet werden; und
einem Lichtabschirmelement (17), das so angebracht ist, dass es einen Umfangsrand des Informationsanzeigeabschnitts (33) überlappt, und das eine lichtabschirmende Eigenschaft hat;
wobei mindestens ein Teil des Lichtleitungskörpers (32) von dem Lichtabschirmelement (17) überdeckt wird; und
wobei das Lichtabschirmelement (17) eine Dekorationsöffnung (17a) aufweist, die in einem Abschnitt eines Bereichs ausgebildet ist, der den Lichtleitungskörper (32) derart überlappt, dass Licht, das durch den Lichtleitungskörper gleitet wird, durch diese hindurchtreten kann;
**dadurch gekennzeichnet, dass**
das Lichtabschirmelement (17) von einem Gehäuse gebildet wird, das an einer oberen Seite des Informationsanzeigeabschnitts (33) angeordnet ist.

2. Fahrzeuginstrument (10) nach Anspruch 1, weiterhin aufweisend einen zweiten Lichtleitungskörper (25), der zwischen dem Lichtleitungskörper (32) und der Dekorationsöffnung (17a) angeordnet ist, um das Licht, das durch den Lichtleitungskörper geleitet wird, in Richtung zur Dekorationsöffnung (17a) zu leiten.

3. Fahrzeuginstrument (10) nach Anspruch 2, wobei der zweite Lichtleitungskörper (25) ein distales Ende (25a) hat, das so gebildet ist, dass es eine raue Oberfläche hat, um Licht, das die Dekorationsöffnung (17a) beleuchtet, zu zerstreuen.

4. Fahrzeuginstrument (10) nach Anspruch 2 oder 3, weiterhin aufweisend einen zweiten Informationsanzeigeabschnitt (M2), der benachbart zu dem Informationsanzeigeabschnitt angeordnet ist, wobei der zweite Informationsanzeigeabschnitt (M2) einen Messwertanzeigeabschnitt (50) umfasst, bei dem Messerwerte (52) an einer Oberfläche davon anzuzeigen werden, und einen Zeiger (42), der drehbar an dem Messwertanzeigeabschnitt (50) angebracht ist, um die Messwerte anzugeben, wobei das Lichtabschirmelement (17) einen Abschnitt aufweist, der zwischen dem Informationsanzeigeabschnitt (33) und dem zweiten Informationsanzeigeabschnitt (M2) gebildet ist, und wobei sich der Messwertanzeigeabschnitt (50) zu einer Position unter dem Abschnitt des Lichtabschirmelements (17) erstreckt, wobei an der Position der zweite Lichtleitungskörper (25) an einer oberen Fläche des Messwertanzeigeabschnitts (50) angebracht ist.

## Revendications

1. Un instrument de véhicule (10) comprenant :
une source de lumière (31) ;
un corps guide de lumière (32) pour guider de la lumière émise à partir de la source de lumière (31) ;
une partie d'affichage d'information (33) pour afficher une information concernant un véhicule en recevant un rayonnement de la lumière guidée par le corps guide de lumière (32) ; et
un élément de masquage de lumière (17) monté pour recouvrir partiellement un bord périphérique de la partie d'affichage d'information (33) et présentant une propriété de masquage de lumière ;
dans lequel au moins une partie du corps guide de lumière (32) est couverte par l'élément de masquage de lumière (17) ; et
dans lequel l'élément de masquage de lumière (17) présente une ouverture de décoration (17a) formée dans une partie d'une région recouvrant partiellement le corps guide de lumière (32) de façon à permettre que passe à travers elle la lumière guidée par le corps guide de lumière ;
**caractérisé en ce que**
l'élément de masquage de lumière (17) est formé par un boîtier disposé sur un côté supérieur de la partie d'affichage d'information (33).

2. L'instrument de véhicule (10) de la revendication 1, comprenant en outre un second corps guide de lumière (25) disposé entre le corps guide de lumière (32) et l'ouverture de décoration (17a) afin de guider la lumière guidée par le corps guide de lumière vers l'ouverture de décoration (17a).

3. L'instrument de véhicule (10) de la revendication 2, dans lequel le second corps guide de lumière (25) présente une extrémité distale (25a) de celui-ci formée pour être une surface rugueuse de façon à diffuser de la lumière qui éclaire l'ouverture de décoration (17a).

4. L'instrument de véhicule (10) de la revendication 2 ou 3, comprenant en outre une seconde partie d'affichage d'information (M2) disposée adjacente à la partie d'affichage d'information,
dans lequel la seconde partie d'affichage d'information (M2) comprend une partie d'affichage de valeur de mesure (50) présentant des valeurs de mesure (52) affichées sur une surface de celle-ci et une aiguille (42) fixée de manière rotative sur la partie d'affichage de valeur de mesure (50) afin d'indiquer les valeurs de mesure, dans lequel l'élément de masquage de lumière (17) présente une partie formée entre la partie d'affichage d'information (33) et la seconde partie d'affichage d'information (M2), et dans lequel la partie d'affichage de valeur de mesure (50) s'étend jusqu'à une position au-dessous de la partie de l'élément de masquage de lumière (17), et dans la position où le second corps guide de lumière (25) est monté sur une surface supérieure de la partie d'affichage de valeur de mesure (50).
